# EUROPÄISCHE PATENTANMELDUNG

(11) **EP 1 333 201 A2**
(43) Veröffentlichungstag der Anmeldung: **06.08.2003**
(21) Anmeldenummer: 03001749.5
(22) Anmeldetag: 28.01.2003
(51) Int. Cl.: F16H 63/18

(54) **Schaltvorrichtung eines Getriebes**

(30) Priorität: 30.01.2002 DE 10203633
(71) Anmelder: ZF FRIEDRICHSHAFEN AG, 88038 Friedrichshafen (DE)
(72) Erfinder: Baasch, Detlef, 88048 Friedrichshafen (DE); Dreibholz, Ralf, 88074 Meckenbeuren (DE); Eckhardt, Lübke, 88048 Friedrichshafen (DE); Gumpoltsberger, Gerhard, 88045 Friedrichshafen (DE); Rieger, Wolfgang, 88048 Friedrichshafen (DE)

(57) **Zusammenfassung**

Es wird eine Schaltvorrichtung (1) eines Getriebes mit einem Kurventrieb beschrieben, der ein auf einer Achse drehbar geführtes mit wenigstens einer Nutenbahn (2) versehenes Schaltelement (3) aufweist. In die Nutenbahn greift wenigstens ein Schaltmittel (4) ein, das bei einer Drehung des Schaltelementes durch die Form der Nutenbahn entsprechend axial bewegbar ist. Die Nutenbahn weist einen als Hochschaltnut (5) ausgebildeten Hochschaltweg und einen für eine Rückschaltung vorgesehenen Rückschaltweg auf. Der Rückschaltweg ist als eine Rückschaltnut (6) ausgebildet, welche das Schaltmittel während einer Rückschaltung in einer einer Neutralposition äquivalenten axialen Schaltstellung führt.

## Beschreibung

Die Erfindung betrifft eine Schaltvorrichtung eines Getriebes nach der im Oberbegriff des Patentanspruches 1 näher definierten Art.

Aus der Praxis sind Schaltvorrichtungen für Geschwindigkeits-Wechselgetriebe für Kraftfahrzeuge bekannt, welche einen Kurventrieb zum Erzeugen von Bewegungen von Schaltmitteln, wie Schaltgabeln und Schaltkupplungen, aufweisen. Die Steuerkurven des Kurventriebes sind auf dem Umfang einer Schaltwalze angeordnet, wobei für jedes Schaltmittel eine Steuerkurve vorgesehen ist. In jede der Steuerkurven greift ein mit dem zugeordneten Schaltmittel verbundener Schaltstift derart ein, daß beim Drehen der Schaltwalze an den Schaltmitteln eine fortlaufend von einem niedrigen zu einem höheren Gang bzw. von einem höheren zu einem niedrigeren Gang verlaufende Schaltbewegung in axialer Richtung der Schaltwalze ausgelöst wird. Während der Schaltbewegung durchlaufen die Schaltmittel jeweils eine zwischen zwei Gängen angeordnete Leerlaufposition.

Derartige Schaltvorrichtungen weisen bei Mehrfachrückschaltungen jedoch den Nachteil auf, daß ein sequentieller Schaltablauf eingehalten werden muß. Das bedeutet, daß bei einer Mehrfachrückschaltung immer nur ein Gang nach dem anderen eingelegt und wieder ausgelegt wird, bis der ausgewählte Gang in dem Getriebe eingelegt ist. Die sequentielle Schaltfolge führt zu einer erheblichen Verlängerung der gesamten Schaltzeit.

Um diesen Nachteil zu vermeiden, ist bei Mehrfachrückschaltungen dazu übergegangen worden, den ausgewählten Gang auf direktem Weg, d. h. ohne sequentiellen Schaltablauf im Getriebe, einzulegen. Dazu werden die Schaltgabeln bei Mehrfachrückschaltungen mit Hilfe geeigneter Einrichtungen ausgehend von den dem aktuell geschalteten Gang entsprechenden Stellungen der Schaltgabeln aus dem Eingriff mit der Schaltwalze genommen und in Richtung ihrer Neutralposition geführt.

Anschließend wird die Schaltwalze so weit in Rückschaltrichtung verdreht, daß die für den angewählten bzw. einzulegenden Gang entsprechende Stellung der Schaltgabeln aus der Neutralposition der Schaltgabeln angefahren werden kann. Durch diese Vorgehensweise entfällt bei Mehrfachrückschaltungen das sequentielle Durchschalten jeden Ganges, wodurch bei Rückschaltungen über mehrere Gänge, d. h. bei Gangsprüngen, erheblich kürzere Schaltzeiten erreicht werden.

In der DE 195 09 477 A1 ist eine Schaltvorrichtung beschrieben, bei der während einer Mehrfachrückschaltung Schaltmittel, die sich in ihrer Leerlaufposition befinden, außer Eingriff mit den Steuerkurven gebracht werden, wobei eine Bewegung der Schaltmittel in Schaltrichtung aus der Leerlaufposition heraus blockiert ist und die Schaltwalze, ohne Zwischenschaltungen im Getriebe auszulösen, in beliebige Stellungen verdrehbar ist. Anschließend werden die Schaltmittel erneut in Eingriff mit den Steuerkurven der Schaltwalze gebracht.

Am Grund der Steuerkurven sind in Drehrichtung "Rückschaltung" der Schaltwalze überfahrbare Rampen vor den Schaltwegauslenkungen der Steuerkurven vorgesehen, wobei die Schaltmittel bei einer Mehrfachrückschaltung während des Auflaufens der Schaltstifte auf die Rampen durch eine Rasteinrichtung in Schaltrichtung blockiert sind.

Hierbei ist jedoch von Nachteil, daß die während des Überfahrens der Rampen für die Arretierung der mit den Schaltstiften verbundenen Schaltmittel vorgesehene Rasteinrichtung eine aufwendige Konstruktion aufweist, die hohe Fertigungskosten verursacht und mit einer zusätzlichen Steuerung ausgestattet werden muß.

Aufgabe der vorliegenden Erfindung ist es, eine Schaltvorrichtung eines Getriebes mit einem Kurventrieb zu schaffen, mittels welcher eine Reduzierung der Schaltzeiten bei Mehrfachrückschaltungen erreicht wird und die eine einfache und kostengünstige konstruktive Ausgestaltung aufweist.

Erfindungsgemäß wird diese Aufgabe mit einer Schaltvorrichtung gemäß den Merkmalen des Patentanspruches 1 gelöst.

Indem der Rückschaltweg als eine Rückschaltnut ausgebildet ist, welche das Schaltmittel während einer Mehrfachrückschaltung in einer einer Neutralposition äquivalenten axialen Schaltstellung führt, können Mehrfachrückschaltungen ohne einen sequentiellen Schaltablauf ausgeführt werden. Daraus ergibt sich der Vorteil, daß die Schaltzeiten von Mehrfachrückschaltungen aufgrund des wesentlich kürzeren Schaltweges erheblich kürzer sind als bei Getrieben, bei denen Mehrfachrückschaltungen über den sequentiellen Schaltweg von Hochschaltungen in umgekehrter Richtung ablaufen.

Weiterhin ergibt sich aus der erfindungsgemäßen konstruktiven Gestaltung des Schaltelementes mit der Rückschaltnut der Vorteil, daß das Schaltmittel während einer Mehrfachrückschaltung in der Rückschaltnut in seiner Neutralposition oder neutralen Schaltstellung geführt ist und zur Vermeidung von Bewegungen des Schaltmittels in Schaltrichtung auf eine aufwendige Rasteinrichtung, wie sie aus dem Stand der Technik bekannt ist, verzichtet werden kann. Darüber hinaus ist eine zusätzliche Steuerung für eine derartige Rasteinrichtung nicht erforderlich, wodurch sich der Steuer- und Regelaufwand deutlich vereinfacht.

In einer vorteilhaften Ausgestaltung der Schaltvorrichtung ist die Rückschaltnut mit einer in einer Hochschaltrichtung äquivalenten Drehrichtung des Schaltelementes wirkenden Sperreinrichtung versehen, so daß das Schaltmittel während einer Hochschaltung durch die Hochschaltnut geführt wird und während einer Mehrfachrückschaltung in der Rückschaltnut geführt ist. Damit ist gewährleistet, daß das Schaltmittel bei Hochschaltungen bzw. Mehrfachhochschaltungen über den sequentiellen Schaltweg geführt wird, und bei Mehrfachrückschaltungen, bei denen sich Verzögerungen der Schaltzeiten besonders nachteilig auswirken, ein direkter Weg in Neutralposition des Schaltmittels abgefahren wird.

Eine vorteilhafte Ausgestaltung der Sperreinrichtung weist eine in Rückschaltrichtung ansteigende und in der Rückschaltnut angeordnete Rampe auf, welche an einer Verzweigung der Nutenbahn zwischen der Hochschaltnut und der Rückschaltnut endet, so daß das Schaltmittel in Rückschaltrichtung durch die Rückschaltnut führbar ist und die Rückschaltnut in Hochschaltrichtung für das Schaltmittel gesperrt ist. Somit ist mit einer einfachen konstruktiven Maßnahme gewährleistet, daß das Schaltmittel in Hochschaltrichtung immer entlang der Steuerkurve der Hochschaltnut geführt wird und bei Mehrfachrückschaltungen über die Rückschaltnut in ihrer Neutralposition auf einem erheblich verkürzten Schaltweg geführt wird.

Um das Schaltmittel beim Durchlaufen der Rückschaltnut auf einfache Art und Weise über die Rampe zu führen, kann es vorteilhafterweise vorgesehen sein, die Rampe und/oder das Schaltmittel in radialer Richtung des Schaltelementes beweglich auszubilden, so daß die in radialer Richtung des Schaltelementes sich verändernde Nuttiefe durch eine radiale translatorische Bewegung des Schaltmittels und/oder der Rampe ausgeglichen werden kann und keine weiteren Maßnahmen im Bereich der in Schaltrichtung des Schaltmittels vorgesehenen Führung vorgenommen werden müssen.

Alternativ hierzu kann es vorgesehen sein, daß die Sperreinrichtung mit einem in dem Schaltelement verschieblich und angefedert gelagerten Sperrelement ausgebildet ist, welches an einer Verzweigung der Nutenbahn zwischen der Hochschaltnut und der Rückschaltnut angeordnet ist. Dabei ist das verschieblich ausgebildete Sperrelement derart angeordnet, daß die Rückschaltnut für das Schaltmittel während einer Hochschaltung gesperrt ist und während einer Mehrfachrückschaltung die Rückschaltnut für das Schaltmittel freigibt.

Die verschiebliche, angefederte Ausgestaltung des Sperrelementes kann dabei in radialer und/oder in axialer Richtung oder in einer dazwischen angeordneten Bewegungsrichtung bezogen auf das Schaltelement ausgebildet sein. Das bedeutet, daß das Sperrelement in das Schaltelement in radialer und/oder in axialer Richtung unter dem Druck des Schaltmittels versenkbar ist und die Rückschaltnut in Rückschaltrichtung freigibt.

Eine weitere vorteilhafte Ausgestaltung der Sperreinrichtung ist mit einem Freilauf ausgebildet, der die Rückschaltnut für das Schaltmittel in Hochschaltrichtung sperrt und in Rückschaltrichtung freigibt. Dabei kann der Freilauf als ein an einer Verzweigung der Nutenbahn zwischen der Hochschaltnut und der Rückschaltnut angeordnetes Drehkreuz mit wenigstens zwei Flügeln ausgebildet sein, welches in einem Blechring angeordnet ist und an dem Schaltelement drehbar gelagert ist. Dies stellt eine konstruktiv besonders einfache Lösung dar, da zur Steuerung der Schaltelemente aus dem Schaltelement keine aufwendigen Formen über spanende Fertigungsverfahren herausgearbeitet werden müssen.

Um die Rückschaltnut über das Drehkreuz in Hochschaltrichtung für das Schaltmittel auf besonders einfache Art und Weise zu sperren, kann der Blechring mit einer ausgestanzten Federlasche versehen sein, welche eine die Rückschaltnut für das Schaltmittel in Hochschaltrichtung freigebende Drehung des Drehkreuzes verhindert und eine die Rückschaltnut für das Schaltmittel in Rückschaltrichtung freigebende Drehung des Drehkreuzes erlaubt. Dies wird dadurch erreicht, daß das Drehkreuz die Federlasche bei einer Mehrfachrückschaltung überstreicht und dabei in den Blechring drückt oder die Federlasche bei einer Hochschaltung für das Drehkreuz als Anschlag dient und die Rückschaltnut für das Schaltmittel nicht passierbar ist.

Um das Schaltmittel bei Mehrfachrückschaltungen sicher über die Rückschaltnut zu führen, ist in einer Ausgestaltung der Schaltvorrichtung eine das Schaltmittel in Schaltrichtung führende Einrichtung derart ausgebildet, daß an dem Schaltmittel eine einer Schaltbewegung des Schaltmittels aus der Neutralposition in Richtung der Schaltposition entgegenwirkende Haltekraft vorliegt, die kleiner als eine von dem Schaltelement auf das Schaltmittel einwirkende Schaltkraft des Schaltelementes ist. Mit dieser vorteilhaften Ausgestaltung der das Schaltmittel führenden Einrichtung wird beispielsweise eine aufgrund von Schwingungen ausgelöste unerwünschte Schaltbewegung des Schaltmittels sicher vermieden. Andererseits wird eine durch das Schaltelement ausgelöste Schaltung durch die Haltekraft vorteilhafterweise nicht behindert bzw. nicht verhindert.

Weitere Vorteile und vorteilhafte Ausgestaltungen des Gegenstandes nach der Erfindung sind der Beschreibung, der Zeichnung und den Patentansprüchen entnehmbar.

Fünf Ausführungsbeispiele einer Schaltvorrichtung eines Getriebes mit einem Kurventrieb nach der Erfindung sind in der Zeichnung schematisch vereinfacht dargestellt und werden in der folgenden Beschreibung näher erläutert, wobei für baugleiche bzw. funktionsgleiche Bauteile dieselben Bezugszeichen verwendet werden.

Es zeigt:
- Fig.1: eine Schaltwalze mit einer Nutenbahn, wobei eine Rückschaltnut mit einer federnden Rampe ausgebildet ist;
- Fig.2: die Schaltwalze gemäß Fig. 1 in einem Teilquerschnitt;
- Fig.3: eine weitere Ausführungsform der Schaltvorrichtung in einer dreidimensionalen Teilansicht;
- Fig.4: eine Abwicklung der Nutenbahn der Schaltvorrichtung gemäß Fig. 3;
- Fig.5: eine weitere Ausführungsform einer Schaltvorrichtung mit einer Sperreinrichtung, wobei ein Sperrelement in axialer Richtung eines Schaltelementes angefedert ist;
- Fig.6: eine weitere Ausführungsform der Schaltvorrichtung mit einer Sperreinrichtung, die mit einem Freilauf ausgebildet ist;
- Fig.7: eine weitere Ausführungsform einer Schaltvorrichtung mit einer Rückschaltnut; und
- Fig.8: eine weitere Ausführungsform einer Schaltvorrichtung, wobei eine Rückschaltnut mit einer Schräge ausgebildet ist.

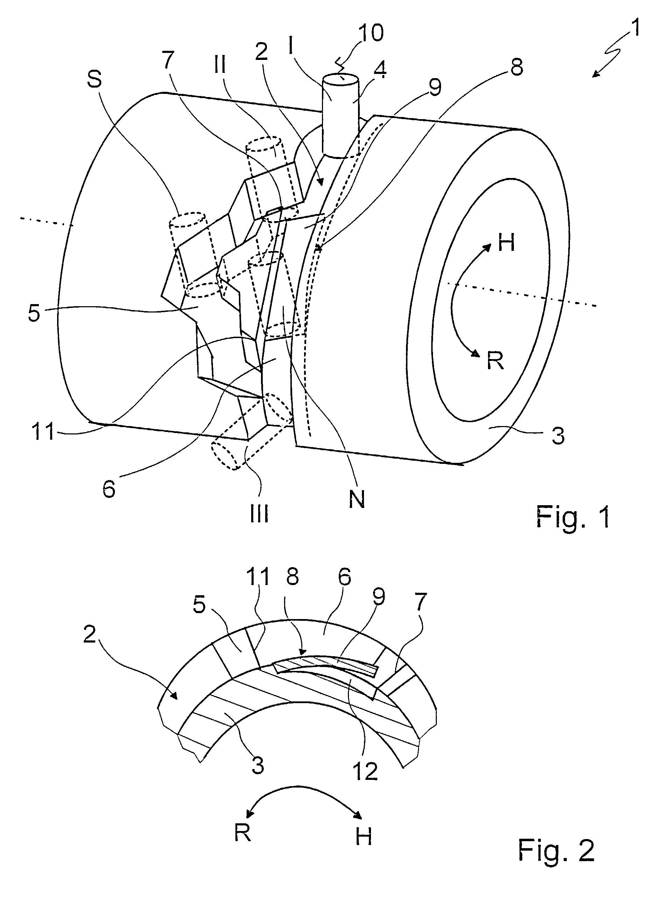

Fig. 1 zeigt eine Schaltvorrichtung 1 eines Getriebes mit einem Kurventrieb, der ein auf einer Achse drehbar geführtes, mit wenigstens einer Nutenbahn 2 versehenes Schaltelement 3 aufweist. In die Nutenbahn 2 greift wenigstens ein Schaltmittel 4 ein, das bei einer Drehung des als Schaltwalze 3 ausgebildeten Schaltelementes durch die Form der Nutenbahn 2 entsprechend in axialer Richtung der Schaltwalze 3 bewegt wird.

Der in Fig. 1 dargestellte Abschnitt des Schaltmittels 4 ist Teil einer Schaltgabel, von welcher lediglich der Schaltfinger bzw. das der Schaltwalze 3 zugewandte Ende gezeigt ist. Die Nutenbahn 2 ist mit einem Hochschaltweg und einem Rückschaltweg versehen, wobei diese jeweils als eine Hochschaltnut 5 und als eine Rückschaltnut 6 ausgebildet sind. Die Hochschaltnut 5 und die Rückschaltnut 6 führen die Schaltgabel 4 während einer Drehbewegung der Schaltwalze 3 derart, daß die Schaltgabel 4 entsprechend dem Verlauf der Nutenbahn 2 von einer Neutralposition "N", deren axiale Position im wesentlichen dem Verlauf der Rückschaltnut entspricht, in eine Schaltposition "S" der Hochschaltnut verstellt wird oder in der Neutralposition "N" verbleibt.

Ausgehend von der in Fig. 1 dargestellten Position I der Schaltgabel 4 wird die Schaltwalze 3 während einer Hochschaltung in Hochschaltrichtung "H" verdreht. Dabei wird eine Verzweigungsstelle 7 der Nutenbahn 2 zwischen der Hochschaltnut 5 und der Rückschaltnut 6 auf die Schaltgabel 4 bzw. deren Schaltfinger zubewegt.

Die Rückschaltnut 6 ist mit einer einer der Hochschaltrichtung "H" äquivalenten Drehrichtung der Schaltwalze 3 wirkenden Sperreinrichtung 8 versehen, deren Wirkungsweise in Verbindung mit der Darstellung in Fig. 2 näher erläutert wird. Die Sperreinrichtung 8 ist mit einer in Rückschaltrichtung "R" der Schaltwalze 3 ansteigenden und in der Rückschaltnut 6 angeordneten Rampe 9 ausgebildet, welche an der Verzweigungsstelle 7 der Nutenbahn 2 zwischen der Hochschaltnut 5 und der Rückschaltnut 6 endet.

Die Rampe 9 ist in radialer Richtung der Schaltwalze 3 als ein Federblech ausgebildet, welches mit einem Ende über den Nutgrund der Rückschaltnut 6 vorsteht und ein Einführen der Schaltgabel 4 ausgehend von der in Fig. 1 dargestellten Position I der Schaltgabel 4 in die Rückschaltnut 6 auf einfache Art und Weise verhindert. D.h., daß die Schaltgabel 4 während einer Hochschaltung von der Rampe 9 in Richtung der Hochschaltnut 5 abgewiesen wird und ein der Position "S" entsprechender Gang in dem Getriebe eingelegt wird.

Mit zunehmender Drehung der Schaltwalze 3 in Hochschaltrichtung "H" wird die Schaltgabel 4 in Richtung Position III verschoben, bis sich die Schaltgabel 4 wieder in der der Neutralposition "N" äquivalenten axialen Schaltstellung befindet.

Erfolgt eine Drehrichtungsumkehr der Schaltwalze 3 von der Hochschaltrichtung "H" in Rückschaltrichtung "R", während sich die Schaltgabel 4 in der Position III befindet, wird die Schaltwalze 3 mit einer weiteren Verzweigungsstelle 11 der Nutenbahn 2 auf die Schaltgabel 4 zubewegt. Mit zunehmender Rotation der Schaltwalze 3 in Rückschaltrichtung "R" gelangt die Schaltgabel 4 in die Rückschaltnut 6, da keine Führungselemente der Schaltwalze 3 an der Schaltgabel 4 angreifen, welche die Schaltgabel 4 in die Hochschaltnut 5 führen. Die Schaltgabel 4 drückt beim Durchfahren der Rückschaltnut 6 die federnd ausgebildete Rampe 9 in die in der Schaltwalze 3 ausgebildete Aussparung 12, bis die Schaltgabel 4 an der Verzweigungsstelle 7 angelangt ist und die Rampe 9 von der Schaltgabel 4 wieder freigegeben wird. Dann federt die Rampe 9 wieder aus der Aussparung 12 heraus, wodurch die Rückschaltnut 6 für die Schaltgabel 4 bei der nächsten Hochschaltung wieder gesperrt ist.

Der Weg der Schaltgabel 4 in der Nutenbahn 2, ausgehend von der in Fig. 1 dargestellten Position I der Schaltgabel 4 in Richtung "S", stellt den Schaltweg der Schaltgabel 4 in der Hochschaltnut 5 bei einer Einfachhochschaltung dar. Bei weiterer Rotation der Schaltwalze 3 in Hochschaltrichtung "H" erfolgt eine weitere Bewegung, bis die Schaltgabel 4 beispielsweise die Position III (Neutral) erreicht hat. Gleichzeit ist eine andere Schaltgabel (hier nicht dargestellt) von der Position I in die Position "S" gefahren.

Während einer Mehrfachrückschaltung oder auch nur Rückschaltung wird die Verzweigungsstelle 11 aufgrund einer Rotation der Schaltwalze 3 in Rückschaltrichtung "R" auf die Schaltgabel 4 zubewegt, bis die Schaltgabel 4 ausgehend von der Position III über die Rückschaltnut 6 in Richtung der Verzweigungsstelle 7 gelangt. Die Wegstrecke, die die Schaltgabel 4 dabei in der Nutenbahn 2 überfährt, ist wesentlich kürzer als jene, welche sie bei einer Hochschaltung überstreicht, und der nicht benötigte Gang wird auch nicht geschaltet. Damit ergibt sich eine wesentlich kürzere Schaltzeit für Mehrfachrückschaltungen, was insbesondere bei starken Bremsungen aus hohen Geschwindigkeitsbereichen, bei denen innerhalb kurzer Zeit mehrere Gangstufen zurückgeschalten werden müssen, um eine anschließende Weiterfahrt ohne Komforteinbuße bzw. mit entsprechender Antriebskraft zu ermöglichen, besonders vorteilhaft ist.

Selbstverständlich liegt es im Ermessen des Fachmannes, die Rampe 9, wie in Fig. 1 dargestellt, starr mit der Schaltwalze 3 auszubilden und die Schaltgabel 4 mit einer Feder 10 auszubilden, um eine radiale Beweglichkeit der Schaltgabel zu ermöglichen und über die Rampe 9 fahren zu können. Fährt die Schaltgabe 4 in Rückschaltrichtung über die Rampe 9, wird die Feder 10 in radialer Richtung der Schaltwalze 3 zusammengedrückt. Nach der Rampe 9 federt die Schaltgabel 4 wieder weiter in die Nutenbahn 2 hinein und kann nicht mehr in die Rückschaltnut 6 geführt werden.

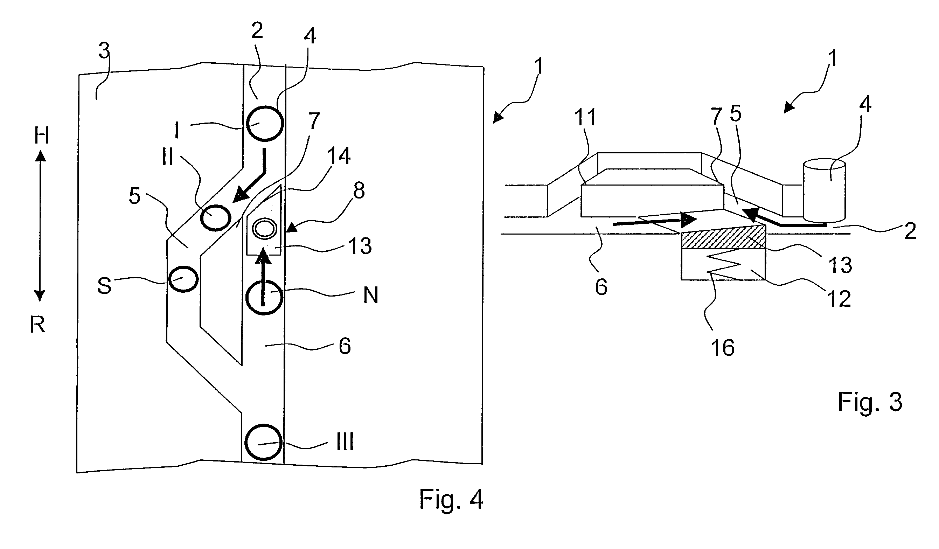

Fig. 3 stellt eine weitere Ausführungsform der Schaltvorrichtung 1 dar, wobei die Sperreinrichtung 8 mit einem in radialer Richtung der Schaltwalze 3 angefederten Sperrelement 13 ausgebildet ist. Das Sperrelement 13 ist an seiner der Schaltwalze 3 abgewandten Seite mit einer in Rückschaltrichtung "R" ansteigenden Schräge versehen, so daß das Sperrelement 13 in Rückschaltrichtung "R" von der Schaltgabel 4 überfahrbar ist und in Hochschaltrichtung die Schaltgabel 4 von dem Sperrelement 13 in die Hochschaltnut 5 abgewiesen wird.

Das Sperrelement 13 wird von der Schaltgabel 4 beim Überfahren in Rückschaltrichtung "R" in die dafür vorgesehene Aussparung 12 gedrückt, so daß die Rückschaltnut 6 für die Schaltgabel 4 freigegeben ist. Bei einer Hochschaltung hingegen ist das Sperrelement 13 aus der Aussparung 12 gedrückt und wirkt als Sperre für die Schaltgabel 4 am Eingang der Rückschaltnut 6 im Bereich der Verzweigungsstelle 7 der Nutenbahn 2.

Das Sperrelement 13 ist vorliegend über eine schematisiert dargestellte Schraubenfeder 16 in radialer Richtung federnd beweglich mit der Schaltwalze 3 verbunden. Selbstverständlich liegt es im Ermessen des Fachmannes, das Sperrelement 13 starr mit der Nutenbahn 2 bzw. der Schaltwalze 3 zu verbinden oder einstückig mit der Schaltwalze 3 auszubilden und die Schaltgabel 4 in radialer Richtung der Schaltwalze 3 federnd beweglich auszuführen. Damit wird erreicht, daß die Schaltgabel 4 in Rückschaltrichtung "R" über die Schräge des Sperrelementes 13 durch die Rückschaltnut 6 führbar ist und die Rückschaltnut 6 in Hochschaltrichtung "H" für die Schaltgabel 4 gesperrt ist. Entscheidend hierbei ist jeweils, daß die Schaltgabel 4 jederzeit in Eingriff mit der Schaltwalze 3 bzw. deren Nutenbahn 2 ist und von dieser in axialer Richtung der Schaltwalze geführt ist, damit eine ungewollte Schaltung vermieden wird.

Selbstverständlich kann anstelle der Schraubenfeder 16 auch jede andere geeignete Federart für die Anfederung des Sperrelementes 13 der Sperreinrichtung 8 oder der Schaltgabel 4 vorgesehen werden.

Fig. 4 stellt eine Abwicklung der Nutenbahn 2 der Schaltvorrichtung 1 gemäß Fig. 3 dar. Die Darstellung soll verdeutlichen, daß die Schaltgabel 4, welche lediglich schematisiert als Kreis dargestellt ist, aus der Position I in Hochschaltrichtung "H" in die zweite Position II an einer Schräge 14 des Sperrelementes 13 entlang und somit an der Rückschaltnut 6 und an der Verzweigungsstelle 7 vorbei und in die Hochschaltnut 5 in Richtung der Schaltposition "S" geführt wird.

Befindet sich die Schaltgabel 4 in einer Position III und wird die Schaltwalze 3 in eine der Rückschaltrichtung "R" äquivalenten Rotation versetzt, wird die Schaltgabel 4 in die Rückschaltnut 6 geführt und das Sperrelement 13 von der Schaltgabel 4 in seine Aussparung 12 gedrückt. Die Schaltgabel 4 gelangt dann in der Nutenbahn 2 auf kürzestem Weg über das Sperrelement 13 hinweg vor der Verzweigungsstelle 7 in ihre Position I.

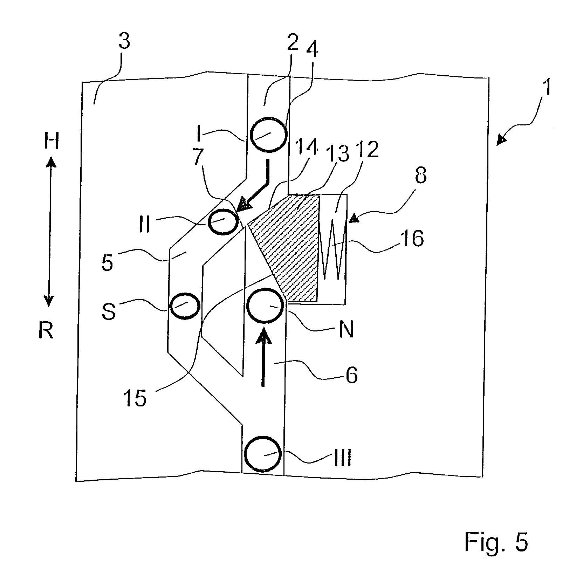

Fig. 5 zeigt die Sperreinrichtung 8, welche mit einem in axialer Richtung der Schaltwalze 3 verschieblich angefederten Sperrelement 13 ausgeführt ist. Das Sperrelement 13 ist mit einer der Hochschaltnut 5 zugewandten Schräge 14 und einer der Rückschaltnut 6 zugewandten weiteren Schräge 15 versehen, wobei die Steigungen der beiden Schrägen 14, 15 derart unterschiedlich ausgebildet sind, daß die Rückschaltnut 6 von dem Sperrelement 13 in Hochschaltrichtung für die Schaltgabel 4 gesperrt ist und in Rückschaltrichtung von der Schaltgabel 4 entgegen der Federkraft der Schraubenfeder 16 in die Aussparung 12 gedrückt wird. Das bedeutet, daß das Sperrelement 13 bei Anliegen der Schaltgabel 4 an der Schräge 14 des Sperrelementes 13 in axialer Richtung der Schaltwalze 3 nicht verschoben wird, bei Anliegen der Schaltgabel 4 an der Schräge 15 des Sperrelementes 13 das Sperrelement 13 in axialer Richtung der Schaltwalze verschoben wird, und die Rückschaltnut für die Schaltgabel 4 freigegeben und passierbar ist.

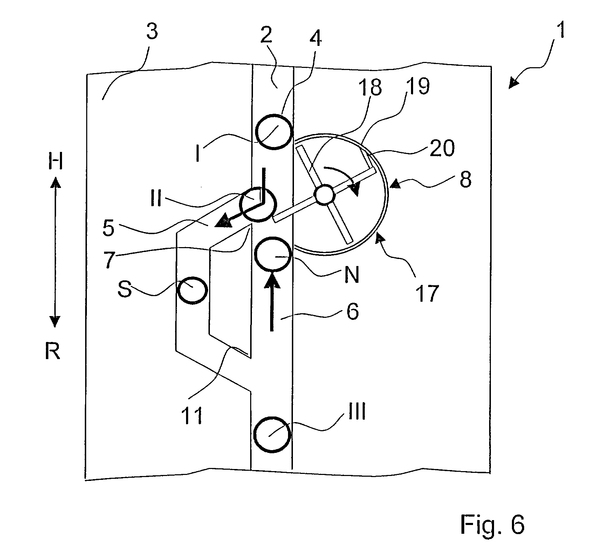

Eine weitere Ausführungsform der Schaltvorrichtung 1 ist in Fig. 6 dargestellt, wobei die Sperreinrichtung 8 mit einem Freilauf 17 ausgebildet ist, der ein Drehkreuz 18 aufweist, das mit vier Flügeln in einem Blechring 19 angeordnet ist und an der Schaltwalze 3 drehbar gelagert ist. Der Blechring 19 ist mit einer Federlasche 20 ausgebildet, welche aus diesem ausgestanzt ist und in Richtung des Drehkreuzes 18 mit ihrem freien Ende aus dem Blechring 19 vorsteht. Wird die Schaltgabel 4 von ihrer Position I in Hochschaltrichtung "H" in Richtung Position II durch Drehung der Schaltwalze gebracht, trifft die Schaltgabel 4 auf einen Flügel des Drehkreuzes 18. Das Drehkreuz 18 wird von der Federlasche 20 an einer Drehung gehindert, so daß die Schaltgabel 4 in die Hochschaltnut 5 gelenkt wird. Mit zunehmender Rotation der Schaltwalze 3 in Hochschaltrichtung gelangt die Schaltgabel 4 in Position III.

Ausgehend von Position III gelangt die Schaltgabel 4 bei einer Rotation der Schaltwalze 3 in Rückschaltrichtung "R" in die Rückschaltnut 6, bis die Schaltgabel 4 in Kontakt mit dem Drehkreuz 18 kommt. Mit zunehmender Rotation der Schaltwalze 3 wird das Drehkreuz 18 verdreht, bis die Schaltgabel 4 aus der Rückschaltnut 6 geführt ist. Das Drehkreuz 18 wird dabei mit einem seiner Flügel über die Federlasche 20 geführt, bis diese sich wieder in ihrer in Fig. 6 dargestellten, sperrenden Position aufstellt und eine die Rückschaltnut 6 in Hochschaltrichtung freigebende Drehung des Drehkreuzes 18 verhindert.

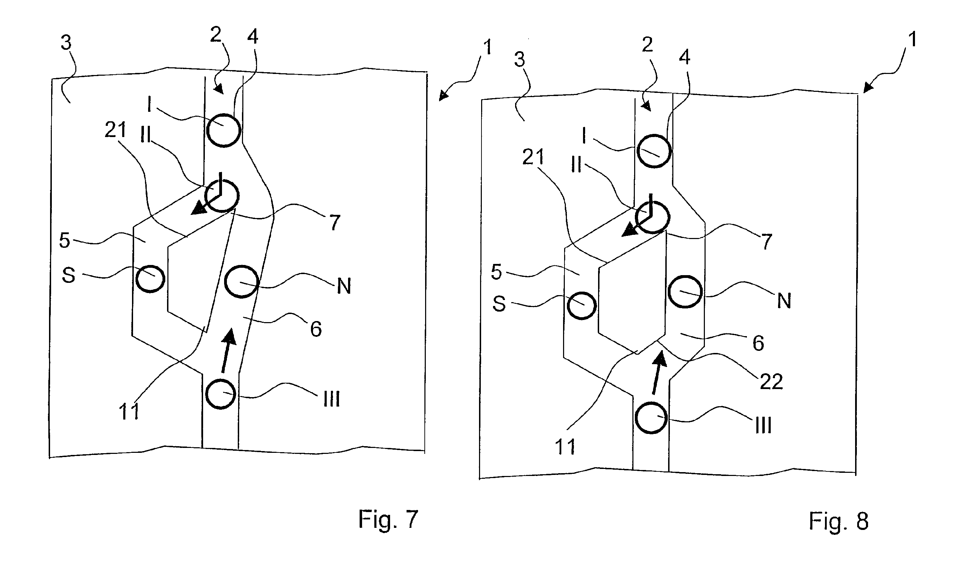

Zwei weitere Ausführungsformen der Schaltvorrichtung 1 sind in Fig. 7 und Fig. 8 dargestellt. Dabei ist die Verzweigungsstelle 7 der Nutenbahn 2 derart ausgeführt, daß die Schaltgabel 4 bei einer Rotation der Schaltwalze 3 in Hochschaltrichtung "H" ausgehend von der Position I in die zweite Position II sicher in die Hochschaltnut 5 geführt wird. Bei einer Hochschaltung ausgehend von Position I kommt die Schaltgabel 4 in Anlage mit einer Schräge 21 der Hochschaltnut 5, so daß die Schaltgabel 4 an der Mündung der Rückschaltnut 6 vorbei sicher in die Hochschaltnut 5 geführt wird.

Befindet sich die Schaltgabel 4 in ihrer Position III und wird die Schaltwalze 3 in Rückschaltrichtung "R" gedreht, wird die Schaltgabel 4 aufgrund der Position der weiteren Verzweigungsstelle 11 an der Mündung der Hochschaltnut 5 vorbei in die Rückschaltnut 6 geleitet. Das bedeutet, daß die Verzweigungsstelle 7 und die weitere Verzweigungsstelle 11 derart in der Nutenbahn 2 angeordnet sind, daß eine Hochschaltung über die Hochschaltnut 5 ausgelöst wird und bei einer Mehrfachrückschaltung die Schaltgabel 4 in der Rückschaltnut 6 in ihrer Neutralposition "N" geführt wird, ohne eine Schaltung im Getriebe auszulösen.

Der Eingang bzw. die Mündung der Rückschaltnut 6 im Bereich der Verzweigungsstelle 7 ist in Hochschaltrichtung "H" der Schaltwalze 3 aus der Bewegungsbahn der Schaltgabel 4 derart verrückt, daß die Schaltgabel 4 auf jeden Fall während einer Hochschaltung in die Hochschaltnut 5 geführt wird. Der Nuteingang bzw. die Mündung der Hochschaltnut 5 ist im Bereich der weiteren Verzweigungsstelle 11 derart aus der Bewegungsbahn der Schaltgabel 4 gerückt, daß die Schaltgabel 4 bei einer Rückschaltung oder Mehrfachrückschaltung sicher in die Rückschaltnut 6 gelangt.

Die Ausführungsform der Schaltvorrichtung 1 gemäß Fig. 8 stellt eine alternative Ausgestaltung zu der in Fig. 7 dargestellten Ausführungsform der Schaltvorrichtung 1 dar. Die Nutenbahn 2 gemäß Fig. 8 ist im Bereich der weiteren Verzweigungsstelle 11 mit einer Schräge 22 ausgestaltet, mit der bei einer Mehrfachrückschaltung eine sichere und harmonische Führung der Schaltgabel 4 in die Rückschaltnut 6 erreicht wird. Der Verlauf der Rückschaltnut 6 in axialer Richtung der Schaltwalze 3 ist derart ausgeführt, daß die von dem Schaltweg der Hochschaltnut 5 wegführende axiale Bewegung der Schaltgabel 4 beim Durchfahren der Rückschaltnut 6 nicht zu einer Schaltung im Getriebe führt.

Damit die Schaltgabel 4 im Bereich der Verzweigungsstelle 7 bei einer Rotation der Schaltwalze 3 in Hochschaltrichtung "H" sicher in die Hochschaltnut 5 geleitet wird und die Schaltgabel 4 bei einer Mehrfachrückschaltung sicher in die Rückschaltnut 6 gelangt, kann es zusätzlich vorgesehen sein, daß die Schaltgabel 4 von einer in Schaltrichtung der Schaltgabel 4 vorgesehenen axialen Führung in ihrer jeweiligen axialen Position gehalten wird. Diese Führung ist vorzugsweise im Bereich des dem mit der Schaltwalze 3 in Eingriff stehenden Ende abgewandten Endes der Schaltgabel 4 angeordnet.

Dies wird über eine nicht näher dargestellte Rasteinrichtung der Führung erreicht, deren auf die Schaltgabel 4 einwirkende Haltekraft einer Schaltbewegung der Schaltgabel 4 aus ihrer jeweiligen Position in Richtung der Neutralposition "N" oder in in Richtung der Schaltposition "S" entgegenwirkt. Die Haltekraft der Rasteinrichtung ist dabei derart eingestellt, daß sie kleiner als eine auf die Schaltgabel 4 wirkende Schaltkraft der Schaltwalze 3 ist. Damit ist gewährleistet, daß die Schaltgabel 4 nur dann eine Verschiebung in axialer Richtung der Schaltwalze 3 bzw. in Schaltrichtung erfährt, wenn diese durch den Verlauf der Nutenbahn 2 ausgelöst wird. Eine selbsttätige axiale Verschiebung der Schaltgabel 4 aufgrund von äußeren Einflüssen, wie beispielsweise Schwingungen oder anderweitig auf die Schaltgabel 4 einwirkenden Kräften, wird damit auf wirkungsvolle Art und Weise vermieden.

Die Gestaltung der Rasteinrichtung kann in beliebiger Art und Weise ausgeführt sein, wobei die Haltekraft vorzugsweise aus einer erhöhten Reibung zwischen der Führung und der Schaltgabel 4 resultieren kann.

### Bezugszeichen

- N: Neutralposition
- S: Schaltstellung
- I, II, III: Position der Schaltgabel

- 1: Schaltvorrichtung
- 2: Nutenbahn
- 3: Schaltwalze, Schaltelement
- 4: Schaltmittel, Schaltgabel
- 5: Hochschaltnut
- 6: Rückschaltnut
- 7: Verzweigungsstelle
- 8: Sperreinrichtung
- 9: Rampe
- 10: Feder
- 11: weitere Verzweigungsstelle
- 12: Aussparung
- 13: Sperrelement
- 14: Schräge
- 15: weitere Schräge
- 16: Schraubenfeder
- 17: Freilauf
- 18: Drehkreuz
- 19: Blechring
- 20: Federlasche
- 21: Schräge der Hochschaltnut
- 22: Schräge der Rückschaltnut

## Patentansprüche

1. Schaltvorrichtung (1) eines Getriebes mit einem Kurventrieb, der ein auf einer Achse drehbar geführtes, wenigstens mit einer Nutenbahn (2) versehenes Schaltelement (3) aufweist, wobei in die Nutenbahn (2) wenigstens ein Schaltmittel (4) eingreift, das bei einer Drehung des Schaltelementes (3) durch die Form der Nutenbahn (2) entsprechend axial bewegbar ist, und wobei die Nutenbahn (2) für eine Hochschaltung einen als Hochschaltnut (5) ausgebildeten Hochschaltweg und für eine Rückschaltung einen Rückschaltweg aufweist, **dadurch gekennzeichnet, daß** der Rückschaltweg als eine Rückschaltnut (6) ausgebildet ist, welche das Schaltmittel (4) während einer Rückschaltung oder einer Mehrfachrückschaltung in einer einer Neutralposition (N) äquivalenten axialen Schaltstellung führt.

2. Schaltvorrichtung nach Anspruch 1, **dadurch gekennzeichnet, daß** die Rückschaltnut (6) mit einer in einer Hochschaltrichtung (H) äquivalenten Drehrichtung des Schaltelementes (3) wirkenden Sperreinrichtung (8) versehen ist, so daß das Schaltmittel (4) während einer Hochschaltung durch die Hochschaltnut (5) geführt wird und während einer Rückschaltung in der Rückschaltnut (6) geführt ist.

3. Schaltvorrichtung nach Anspruch 2, **dadurch gekennzeichnet, daß** die Sperreinrichtung (8) als eine in Rückschaltrichtung (R) ansteigende und in der Rückschaltnut (6) angeordnete Rampe (9) ausgebildet ist, welche an einer Verzweigungsstelle (7) der Nutenbahn zwischen der Hochschaltnut (5) und der Rückschaltnut (6) endet, wobei die Rampe (9) und/oder das Schaltmittel (4) in radialer Richtung des Schaltelementes (4) beweglich ausgebildet ist, so daß das Schaltmittel (4) während einer Rückschaltung über die Rampe (9) führbar ist.

4. Schaltvorrichtung nach Anspruch 2, **dadurch gekennzeichnet, daß** die Sperreinrichtung (8) mit einem in dem Schaltelement (3) verschieblich und angefedert gelagerten Sperrelement (13) ausgebildet ist, welches an einer Verzweigungsstelle (7) der Nutenbahn (2) zwischen der Hochschaltnut (5) und der Rückschaltnut (6) angeordnet ist, wobei das Sperrelement (13) die Rückschaltnut (6) für das Schaltmittel (4) während einer Hochschaltung sperrt und während einer Rückschaltung von dem Schaltmittel (4) aus der Rückschaltnut (6) führbar ist.

5. Schaltvorrichtung nach Anspruch 4, **dadurch gekennzeichnet, daß** das Sperrelement (13) in radialer und/oder in axialer Richtung des Schaltelementes (3) angefedert ist.

6. Schaltvorrichtung nach Anspruch 2, **dadurch gekennzeichnet, daß** die Sperreinrichtung (8) mit einem Freilauf (17) ausgebildet ist, der die Rückschaltnut (6) in Hochschaltrichtung (H) sperrt und in Rückschaltrichtung (R) freigibt.

7. Schaltvorrichtung nach Anspruch 6, **dadurch gekennzeichnet, daß** der Freilauf (17) ein an einer Verzweigungsstelle (7) der Nutenbahn (2) zwischen der Hochschaltnut (5) und der Rückschaltnut (6) angeordnetes Drehkreuz (18) mit wenigstens zwei Flügeln aufweist, welches in einem Blechring (19) an dem Schaltelement (3) drehbar gelagert ist.

8. Schaltvorrichtung nach Anspruch 7, **dadurch gekennzeichnet, daß** der Blechring (19) mit einer Federlasche (20) versehen ist, welche eine die Rückschaltnut (6) für das Schaltmittel (4) in Hochschaltrichtung (H) freigebende Drehung des Drehkreuzes (18) verhindert und eine die Rückschaltnut (6) in Rückschaltrichtung (R) freigebende Drehung des Drehkreuzes (18) erlaubt.

9. Schaltvorrichtung nach einem der Ansprüche 1 bis 8, **dadurch gekennzeichnet, daß** eine das Schaltmittel (4) in Schaltrichtung führende Einrichtung derart ausgebildet ist, daß eine einer Schaltbewegung des Schaltmittels (4) aus der Neutralposition (N) in Richtung der Schaltposition (S) entgegenwirkende Haltkraft vorliegt, die kleiner als eine Schaltkraft des Schaltelementes (3) ist.
